(19) Europäisches Patentamt
European Patent Office
Office européen des brevets

(11) **EP 3 698 118 B1**

(12) **EUROPEAN PATENT SPECIFICATION**

(45) Date of publication and mention of the grant of the patent:
**28.07.2021 Bulletin 2021/30**

(51) Int Cl.:
***G01M 17/02*** *(2006.01)*

(21) Application number: **18804120.6**

(22) Date of filing: **18.10.2018**

(86) International application number:
**PCT/IB2018/058098**

(87) International publication number:
**WO 2019/077545 (25.04.2019 Gazette 2019/17)**

(54) **METHOD AND APPARATUS FOR CHECKING TYRES**

VERFAHREN UND VORRICHTUNG ZUR ÜBERPRÜFUNG VON REIFEN

PROCÉDÉ ET APPAREIL POUR CONTRÔLER DES PNEUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2017 IT 201700119150**

(43) Date of publication of application:
**26.08.2020 Bulletin 2020/35**

(73) Proprietor: **Pirelli Tyre S.p.A.**
**20126 Milano (IT)**

(72) Inventors:
• **HELD, Alessandro**
**I-2016 Milano (IT)**

• **CANTU', Marco**
**I-20126 Milano (IT)**
• **ANTOJ, Riccardo**
**I-20126 Milano (IT)**
• **BOFFA, Vincenzo**
**I-2016 Milano (IT)**

(74) Representative: **Porta & Consulenti Associati S.p.A.**
**Via Vittoria Colonna, 4**
**20149 Milano (IT)**

(56) References cited:
**WO-A1-2015/079370     WO-A1-2017/141094**

## Description

The present invention relates to a method and an apparatus for checking tyres, for example in a tyre production line, in particular a method and an apparatus for checking for the possible presence of defects close to the lateral portions of a tyre.

The production cycles of a tyre provide for making and/or assembling the various components of a tyre being processed in one or more building lines and subsequently subjecting the green tyre to a molding and vulcanization process adapted for defining the structure of the tyre according to a desired geometry and tread pattern.

The tyre, when molded and vulcanized, is defined by a toroidal structure wound around a rotation axis and substantially symmetrical with respect to an axial middle plane perpendicular to said rotation axis. In particular, the toroidal structure comprises a crown portion arranged substantially perpendicular to the axial middle plane in a radially outer area of the tyre, two anchoring portions arranged in radially inner areas of the tyre respectively on opposite sides of the axial middle plane and two lateral portions that respectively extends from opposite sides of the axial middle plane between one of the anchoring portions and the crown portion.

The term "axial middle plane" is meant to indicate a plane perpendicular to the rotation axis equidistant from the axially outer portions of the tyre itself.

The term "crown portion" of the tyre is meant to indicate a portion of the tyre arranged substantially perpendicular to the axial middle plane, comprising a tread band and belt structure and carcass structure portions arranged radially inner with respect to the tread band.

The term "anchoring portions" of the tyre, also commonly defined as "beads", is meant to indicate the radially inner areas of the tyre, respectively arranged on opposite sides of the axial middle plane, configured so as to engage with the rim of a wheel.

The term "lateral portions" of the tyre is meant to indicate portions of the tyre that respectively extend from axially opposite sides of the axial middle plane between each of the anchoring portions and the crown portion, corresponding to what are known as the sidewalls and to portions of the carcass structure arranged in axially inner position with respect to the aforementioned sidewalls.

The terms "support lateral portion" and "free lateral portion" of the tyre are meant to respectively indicate a lateral portion of the tyre resting on a support plane and the opposite lateral portion arranged a certain height from the support plane.

The terms "outer surface" or "inner surface" of the tyre or of portions thereof, are meant to respectively indicate the surface intended to remain visible after the coupling of the tyre with its mounting rim and that intended not to be visible any more after said coupling. The inner and outer surface delimit the tyre.

The term "reference circumference" of a tyre is meant to indicate a predetermined annular surface on the outer or inner surface of the tyre, in particular of the crown portion of said tyre.

The term "measuring surface" is meant to indicate a surface subjected specifically to checking having small dimensions with respect to the total surface of said lateral portions.

The term "tyre profile" is meant to indicate the outline of at least part of the surface of the tyre, preferably of at least one among the outer surface and the inner surface of the tyre. Preferably, it is meant to indicate the outline taken on a radial section plane that contains the rotation axis of the tyre.

The term "image" or synonymously "digital image" is meant to indicate in general a set of data, typically contained in a computer file, in which each coordinate (typically two-dimensional) of a finite set (typically two-dimensional and in a matrix, i.e. N lines x M columns) of spatial coordinates (each typically corresponding to a pixel) is associated with a corresponding set of numerical values (which can be representative of different types of magnitudes). For example, in monochromatic images (like grayscale ones) such a set of values coincides with a single value in a finite scale (typically with 256 levels or tones), such a value being for example representative of the level of luminosity (or intensity) of the respective spatial coordinate when visualized, whereas in color images the set of values represents the level of luminosity of multiple colors, or channels, typically the primary colors (for example in RGB coding red, green and blue, whereas in CMYK coding cyan, magenta, yellow and black). The term 'image' does not necessarily imply the actual visualization thereof.

Every reference to a specific "digital image" (for example a two-dimensional digital image initially acquired on the tyre) more generally encompasses any digital image able to be obtained through one or more digital processings of said specific digital image (like for example filtering, equalization, "thresholding", morphological transformations - "opening", etc., - calculations of gradients, smoothings, etc.).

The term "height" of a portion of the tyre or of the reference circumference indicates the value with respect to a reference plane of a coordinate of a point of the portion of the tyre or of the reference circumference, for example preferably the coordinate along the axis Z with respect to a support plane. In the present description, the axis Z is preferably defined as an axis parallel to a rotation axis of the tyre as positioned during the check (rested on said support plane).

US 2006/0272408 describes a method and an apparatus for measuring the uniformity of the tyre. The method comprises the steps of mounting the tyre on a spindle, pressing a circumferential surface of a rotating drum against the tread surface of the tyre with a first pressing force, rotating the tyre about its axis, and calculating the forces on a first and a second plane of the tyre through the calculation means while the tyre is rotating.

WO 2015/079370 by the same Applicant describes an apparatus for checking tyres comprising a support plane configured to receive a tyre with axial middle plane parallel to the support plane, defining a support lateral portion and a free lateral portion arranged at a certain height with respect to the support plane. A tool is configured to apply a force directed towards the support plane to a measuring surface of the free lateral portion. A positioning actuator is operatively associated with the tool and configured to move the tool with at least one motion component perpendicular to a rotation axis of the tyre. The apparatus also comprises devices for modifying the angular position of the measuring surface. A control unit is programmed to detect a first value of an output datum at every position of the measuring surface as a function of a first value of an input datum kept substantially constant along at least one complete rotation of the measuring surface about the rotation axis and to detect a second value of the output datum at every position of the measuring surface. The second value of the output datum corresponds to a second value of the input datum kept substantially constant along at least one complete rotation of the measuring surface. The control unit comprises a module programmed to calculate a difference between the second value of the output datum and the first value of the output datum at every position of the measuring surface.

In known production cycles, in order to identify defects, the molded and vulcanized tyre is subjected to a manual visual check or can be subjected to an automatic check as for example described in the aforementioned document.

One of such manual visual checks is aimed at discarding tyres in which the lateral portion has low rigidity, i.e. at identifying the so-called "weak sidewall" defect, the term sidewall being meant to indicate a lateral portion of the finished tyre.

The Applicant has observed that the accuracy of the manual checks carried out up to now depends greatly on the experience of the worker in charge of the check and has a high component of subjectivity.

The Applicant has observed that the use of automatic checks on the tyre of the type illustrated in US 2006/0272408 can improve the objectivity of the check itself but due to the high number of factors involved, precision in the measurement and repeatability of the checking process may not be ensured.

As described in WO 2015/079370, the Applicant itself has developed an apparatus and a method for detecting the "weak sidewall" defect which provides for arranging the tyre to be checked on a support plane according to unchanging ways relative to the check to be carried out, and acting on the free lateral portion for equal or different time periods with forces of different size. In this way, some factors that led to uncertain repeatability of the checks and to a good outcome thereof could be reduced.

However, the Applicant has observed that the check described in WO 2015/079370, although it solves some of the aforementioned problems, takes a relatively long time to carry out, since in order to carry it out it is necessary to perform an action on the free lateral portion of the tyre through at least two forces or at least two movements, thus implying a repetition of the check at least twice in all of its steps, lengthening the overall times thereof.

Furthermore, in order to be able to correctly identify the tyre portion in which there is a defect, it is necessary to carry out the described compression and deformation operation on both of the lateral portions of the tyre, therefore requiring that the tyre itself be inverted so as to be able to check both of its lateral portions.

Moreover, even if the measurements are carried out in both of the lateral portions of the tyre of WO 2015/079370, there could sometimes be "uncertain" cases in which the measurement is not definitive for determining whether or not there is a defect.

WO 2017/141094 A1 describes an apparatus for checking tyres, comprising: a support on which said tyre can rest, the tyre having a resting wall and a free wall, the free wall being arranged at a certain height with respect to said support; a first deformation system configured to apply, through physical contact, a compression force on a surface of a first portion of free wall, in order to elastically deform it so as to form a first free wall deformed portion; a first positioning actuator operatively associated with said first deformation system and configured to move said first deformation system towards and away from said surface of the free wall first portion, the movement having at least one component along a first axis parallel to a rotation axis of said tyre; a second deformation system configured to apply, through physical contact, a compression force on a surface of a second portion of the free wall, in order to elastically deform it so as to form a second free wall deformed portion; a second positioning actuator operatively associated with said second deformation system and configured to move said second deformation system towards and away from said surface of the free wall second portion, said movement having at least one component along a second axis parallel to said rotation axis of said tyre; a moving member to set said tyre in relative rotation about said rotation axis with respect to said first deformation system and the second deformation system; wherein a first plane passing through the rotation axis and the first axis and a second plane passing through the rotation axis and the second axis form an angle between them comprised between about 90° and about 180°.

The Applicant has perceived that by arranging the tyre to be checked on a support plane and deforming a lateral portion thereof, but at the same time measuring the reaction to the deformation of the lateral portion of a relatively rigid part of the tyre itself, all of the factors that led to the presence of uncertain cases can be reduced and the duration of the total cycle time can also be shortened, even considerably.

The Applicant has finally found that the arrangement of the tyre on a support plane, the subsequent application of a force on a lateral portion of the tyre, and the simultaneous measurement of a height of a reference circumference positioned outside of the lateral portions, solve the problems outlined above, making it possible to minimize the cycle time, also avoiding the aforementioned inversion of the tyre and the presence of "uncertain" cases.

More precisely, in accordance with claim 1, the invention relates to a method for checking tyres.

It is provided for to arrange a tyre having a rotation axis on a support plane defining a support lateral portion, a free lateral portion arranged at a certain height with respect to said support plane, and a crown portion arranged between the free lateral portion and the support lateral portion.

It is provided for to select a reference circumference of said tyre placed at said crown portion.

It is provided for to bring a tool towards said tyre arranged on the support plane so as to rest on a measuring surface, said measuring surface being a portion of outer surface of said free lateral portion.

It is provided for to push said measuring surface through said tool so as to apply a tool force on said measuring surface towards the support plane creating a deformed measuring surface positioned at a tool height.

It is provided for, during said pushing action, to set said tyre in relative rotation with respect to said tool for at least one complete rotation about said rotation axis.

It is provided for to measure a height of said reference circumference during said complete rotation.

It is provided for to determine whether said tyre has a defect on the base of said measured height of said reference circumference.

The Applicant deems that the method according to the invention solves the outlined problems thanks to different factors. Indeed, according to the invention, a compression is carried out, i.e. a force is applied, to a lateral portion of the tyre. The lateral portions of the tyre, including the so-called sidewalls and beads thereof, are relatively "deformable" and therefore, through the imposition of a force, deform changing their spatial coordinates. By applying a force to a part of lateral portion of a tyre rested with an opposite lateral portion at a support, the height of the part of lateral portion on which the force is applied changes. However, this change in height can be due both to a deformation of the lateral portion on which the force itself is applied, or to a deformation of the opposite lateral portion rested at the support or, as commonly occurs, to both. The deformation of the crown portion is substantially negligible. In fact, the crown portion between the two lateral portions is more rigid with respect to the lateral portions and thus more difficult to deform. By checking the changes of height of a part of this crown portion, for example considering changes of height of a reference circumference made in the crown portion and taken as reference, it is possible to determine whether the deformation is "excessive" for one of the two lateral portions, or in any case whether one deformation is greater than the other, and thus whether there is a defect.

For example, it is possible to determine, given a depression in height of a value D of the measuring portion of the tyre, whether this depression D is due almost exclusively to the lateral portion rested at the support, and therefore the height of the reference circumference will change height by a value close to D, or to the free lateral portion, and in this case the height of the reference circumference will change little.

The term depression indicates the difference between the height of a rest point (i.e. without deformation) and the height of the same point during the deformation.

The relative rotation between tyre and tool makes it possible to determine the presence of defects in any angular position of the tyre since a force is applied substantially along the entire 360° extension of the tyre.

Furthermore, it is possible to combine the measurement of the height of the reference circumference with other measurements, for example measurements of the tool height, of the deformed measuring surface (part of lateral portion), or of the tool force applied, to distinguish relatively "uncertain" cases where a single measurement would not be sufficient.

Therefore, according to the method of the invention, it is not necessary to rotate the tyre by 180° perpendicular to the rotation axis in order to examine both of the lateral portions, with a single measurement being sufficient. The measuring time is therefore reduced.

The Applicant deems that, by using the aforementioned solution, the method for checking tyres makes it possible to make an industrial automated checking system for tyres built/produced in any production plant, including plants that produce a large number of tyre models, even very different from one another, at the same time meeting the aforementioned requirements with particular reference to the accuracy/repeatability of the checks, to the compatibility with the building/production cycle time and to the flexibility and specificity of the entire checking system with regard to every tyre model.

In accordance with claim 10, the invention relates to an apparatus for checking tyres.

A support plane is provided on which said tyre is adapted for being rested, said tyre thus internally defining a support lateral portion, a free lateral portion arranged at a certain height with respect to said support plane, and a crown portion arranged between the free lateral portion and the support lateral portion.

A tool is provided that is configured to apply a tool force directed towards the support plane to a measuring surface of said free lateral portion of the tyre so as to take it to a tool height.

A positioning actuator is provided that is operatively associated with the tool and configured to move said tool towards said tyre.

A rotation device is provided to relatively change the angular position of the measuring surface with respect to the tool.

A first height sensor is provided, adapted for measuring a height of a reference circumference identified in said crown portion of said tyre.

A control unit is provided.

The control unit is programmed to send a command to said positioning actuator so as to take said tool towards said tyre arranged on the support plane so as to rest on said measuring surface, and push said measuring surface through said tool so as to apply said tool force on said measuring surface towards the support plane.

The control unit is programmed to send, during said pushing action, a command to said rotation device to set said tyre in relative rotation with respect to said tool.

The control unit is programmed to process a signal coming from said first height sensor so as to measure a height of said reference circumference during said rotation.

The control unit is programmed to indicate said tyre as including a defect based on said measured height measurement of said reference circumference. The Applicant deems that the apparatus according to the invention solves the outlined problems and allows the application of the method according to claim 1. In particular, the Applicant deems that the detection through a sensor of the height of the reference circumference during the application of the force that generates the deformation makes it possible, through the examination of only one of the two lateral portions, to identify defects on both of them, as well as to establish which of the two contains a defect. Therefore, the cycle time is halved.

The present invention in at least one of the aforementioned claims 1 and 10 can have at least one of the following preferred features.

Preferably, it is provided, during said relative rotation, for said tool to be in successive contact with a plurality of different measuring surfaces, portions of outer surface of said free lateral portion, angularly spaced.

Preferably, it is provided for to measure said tool height of said measuring surface along said complete rotation and/or to measure the tool force exerted by said tool on said measuring surface along said complete rotation.

Preferably, it is provided for to determine whether said tyre has a defect based on said measured tool height and/or said measured tool force.

Advantageously, the measurement of the height of the reference circumference as an indication of the presence of defects in the tyre is combined with further measurements. For example, the height of the measuring surface, called tool height, during a complete rotation, is also measured. Preferably, the force that generates the deformation, called tool force, applied to the measuring surface, is also measured. These two additional values can furthermore provide indications relative to whether or not there are defects. In fact, a high depression, i.e. a tool height substantially different from a rest tool height in a point of the tyre by means of a relatively modest force can be an indication of the presence of a defect. Alternatively, a minimal depression to very high depression forces can also be an indication of the presence of defects. By combining various measurements it is therefore possible to identify a plurality of defects in the tyre in a relatively modest cycle time.

Preferably, the tool force includes at least one component parallel to the rotation axis of the tyre.

Preferably, it is provided for to keep the tool force exerted on said measurement surfaces substantially constant along at least one complete rotation about said rotation axis.

Due to the compression caused by the tool force, the measuring surface moves to a tool height that is preferably measured. The values of this tool height can for example identify whether or not there are defects, such as the weak sidewall defect. Although the tool force applied is constant during the rotation in this preferred example, it is not certain that the tool height to which the measuring surface is brought is constant during the rotation, but indeed depends on the inner structure of the lateral portion examined.

In a preferred manner, so as to maintain a constant force applied on the measuring surface during the complete rotation of the tyre, a "zero height" point is established, i.e. the position of a part of the free lateral portion at rest, i.e. before the deformation, to be used as starting point for the deformation itself. In other words, it is provided for to measure a profile of at least one part of the free lateral portion of the tyre, so as to know at what height to position the tool to establish where the force must be applied. The profile determines the zero height point on which the tool abuts. The various profiles can be saved inside a database, so that for every tyre model its profile and therefore the position of the "zero height" is known.

More preferably, said tool force is comprised between about 10 N and about 150 N.

Through laboratory testing, the Applicant has verified that the height to which to bring the measuring surface or the force to be applied to the measuring surface, if within these ranges, is such as to cause a substantial movement, but always in the elastic field, of the free lateral portion to evaluate the response thereof in terms for example of rigidity.

Preferably, alternatively, it is provided for to keep the tool height of said measuring surfaces substantially constant along at least one complete rotation about said rotation axis.

In this case, during the rotation a tool force, which can change during the rotation, applied to the measuring surfaces, is preferably measured.

In the case in which it is wished to take the measuring surface to a constant height during said relative rotation, the "zero height" point from which the depression is carried out, i.e. the point from which it is calculated how much to compress the tyre so as to reached the desired tool height, is preferably determined. Preferably, the "zero height" is firstly determined through processing of a three-dimensional profile of the tyre saved for example in a suitable memory. Alternatively, the "zero height" is measured directly when the tyre is rested on the support. Taking this height or these heights from the three-dimensional profile of the tyre, and having established what operation to carry out on it/them to determine the device height, the measuring surface is deformed so as to bring it towards the support plane up to such a value, i.e. distance between support plane and deformed surface of the tyre, which is kept substantially constant for the entire rotation.

Alternatively, the tool height to which the tyre is taken can depend on a plurality of heights, i.e. for example a plurality of points from 1 to n of the three-dimensional profile are determined, a statistical quantity thereof (mean, median, etc.) is calculated and a constant value, which is the desired depression, is subtracted from such a statistical quantity.

The depression is preferably comprised between about 5 mm and about 20 mm.

In both cases, in the case in which a tool carries out such a deformation, the position along the vertical axis of the tool that deforms the surface of the tyre remains substantially unchanged during the relative rotation of 360° between tool and tyre.

Preferably, it is provided for to determine an average height with respect to said support plane of a plurality of points of said three-dimensional profile of said measuring surface of a model tyre.

In a preferred example, the height to which the model tyre is taken that is preferably maintained for the entire relative rotation of the tyre, is a function of the average height of a plurality of points belonging to the measuring surfaces. From such an average height calculated from the three-dimensional profile of the tyre, the device height can be obtained in various ways.

Preferably, it is provided for to set a desired tool height value to which to take said deformed surface.

Preferably, it is provided for to set a maximum tool force value.

Preferably, it is provided for to push said measuring surface through said tool so that said measuring surface reaches said desired tool height.

Preferably, it is provided for to measure said tool force during said pushing action.

Preferably, it is provided for to block said pushing action if said tool force reaches and/or exceeds said maximum tool force.

Preferably, it is provided for to keep said maximum tool force along at least one complete rotation about said rotation axis.

The tyres, depending on the size, model and relative dimensional ratios, do not all offer the same resistance to deformation and therefore are not deformable in the same way. For example, excessively deforming a tyre can cause a permanent damage thereof and/or an impossibility of accurately determining the possible presence of defects. A deformation that is too "small" may not allow small-sized defects to be detected. Therefore, even if it was wished to deform the tyre until the measuring surface is taken to a desired tool height, in the case in which reaching such a tool height risks damaging the tyre, it is advantageously provided for to associate a maximum tool force and to keep it constant on the measuring surfaces during the rotation whenever, during the measurement, reaching the predetermined tool height would involve the application of an excessive force. In this case, although a measurement is provided for at a "constant" height, a measurement is carried out at "constant" force equal to the set maximum tool force.

Preferably, it is provided for to arrange a database including a plurality of tyre models, each tyre model of the plurality being associated with a rest height of said free lateral portion.

Preferably, it is provided for to determine the tyre model arranged on the support plane.

Preferably, it is provided for to recover a value of said rest height from said database and associated with the determined tyre model.

Preferably, it is provided for to push said measuring surface through said tool up to said tool height from said rest height as recovered from said database or to push said measuring surface through said tool from said rest height as recovered from said database with said tool force.

Therefore, a "profile" of a plurality of different tyre models is saved in a database. These profiles are used to determine the "zero height" from which to calculate the desired depression so as to take the tyre to the desired tool height. In this way, the calculation of the tool height is independent from other reference systems, like for example the position of the support, ensuring a greater precision in the compression of the tyre at the desired height.

Preferably, arranging a tyre having a rotation axis on a support plane includes arranging said tyre on said support plane with axial middle plane substantially parallel to the support plane.

In this way, there are portions of outer surface of the tyre that are substantially parallel to the support plane or that have a substantially constant height from the support plane for an extension thereof about the rotation axis of the tyre.

Preferably, said tyre includes a tread portion and selecting a reference circumference includes selecting a reference circumference on said tread portion.

The reference circumference is preferably selected on the tread portion of the tyre so as to be defined on a part of outer surface of the tyre opposite which there is more space to position a sensor with respect to the low volume present at the center of the tyre in the case in which the circumference was defined in the inner surface thereof. Furthermore, the tread is generally a fairly "rigid" part of the tyre, and therefore is relatively less deformed by the application of a force. Therefore, changes of its height are essentially due to changes in height of the free lateral or support portion of the tyre.

Preferably, determining whether said tyre has a defect based on said height of said reference circumference includes determining whether said tyre has a defect on said support lateral portion or on said free lateral portion based on said height of said reference circumference.

More preferably, it is provided for to obtain a rest height of said reference circumference; determining a difference between said rest height and said tool height during said complete rotation; and determining whether said tyre has a defect on said support lateral portion or on said free lateral portion based on said difference.

Even more preferably, determining whether said tyre has a defect on said support lateral portion or on said free lateral portion based on said difference includes determining whether said difference is greater than a first threshold or said difference is less than a second threshold.

The measurement of the height of the reference circumference makes it possible to establish, amongst other things, whether, in the case of the presence of the so-called "weak sidewall" defect, it is present in the free lateral portion or in the support lateral portion of the tyre, without having to examine both of the lateral portions, but only one of them. In fact, when there is a deformation of the measuring surface of the tyre by a certain value, i.e. depression of the measuring surface to a certain tool height, the reference circumference is also "depressed" and taken to a different determined height. The term depression is meant to indicate the amount (in modulus):

## depression: Rest height − Height during the deformation (= tool height)

where the term height is meant to indicate the ordinate along the vertical axis Z, the axis considered parallel to the rotation axis of the tyre and thus perpendicular to the support plane, of a point, whether it is of the measuring surface or of the reference circumference.

Therefore, preferably, for every point of the measuring surface its rest height, i.e. before the compression, is initially calculated and then its tool height when the tool force is applied. Substantially, a point is established for each measuring surface for which to measure both the rest and tool height so that during the angular movement of the tyre, the tool height of the corresponding point is continued to be measured in each subsequent measuring surface. The same thing is carried out for the reference circumference.

The rest height can be measured in the same way or it can be saved in a three-dimensional profile in a database.

Depending on the relationship between the depression of the measuring surface of the tyre and the depression of the reference circumference, considering a point at the same angular position of the tyre, it is possible to verify whether the weak sidewall defect is present in the support lateral portion (the reference circumference has a "consistent" depression) or in the free portion (the depression of the reference circumference is "small").

Therefore, it is possible to determine a first and a second threshold, which can be a function of the depression value of the measuring surface, so that if the depression of the reference circumference, for example considering a mean or median of all of the specific depression values along a rotation of the tyre as general depression value, is below a certain threshold, the weak sidewall is the free one, or if it is greater than a second threshold, the weak sidewall is the one resting on the support plane.

Preferably, it is provided for to detect an image of a portion of said reference circumference during said rotation.

Advantageously, at every angular position an image of the reference circumference is obtained. Obtaining digital images is preferred since different systems for processing images are known in the field that are very precise and quick in being able to measure movements and changes of the height of a reference point. Therefore, in this way the measurement system is particularly fast and accurate, minimizing the cycle time.

More preferably, it is provided for to detect a first image of a portion of said reference circumference at rest; to detect a second image of a portion of said reference circumference during said rotation in a same angular position in which said first image was detected; and to determine said difference by comparing said first and said second image.

The movement is preferably calculated by comparing two digital images with each other. The calculation of the difference is fast and precise and carried out for example through suitable software.

Preferably, it is provided for to keep the tool force exerted on said measuring surfaces substantially constant along said at least one complete rotation about said rotation axis; to measure said tool height of said measuring surface at a plurality of relative angular positions between said tyre and said tool along said complete rotation; and wherein determining whether said tyre has a defect based on said height of said reference circumference and based on said tool height of said measuring surface includes classifying said tyre as including a defect if at least one tool height measured in said complete rotation is outside of a predetermined range of height values.

Therefore, if for a certain predetermined tool force value that remains constant during the rotation, the deformation is "great", i.e. if the depression of the measuring surface that is measured is greater for example than a certain predetermined value, so that the difference between the measured tool height of a point of the measuring surface and the height of the same point at rest is greater than a certain value, then it is deduced that the defect searched for is present and therefore the tyre is preferably discarded.

In fact, an excessive deformation for a given tool force value applied indicates an intrinsic weakness of the tyre in at least one portion thereof. Alternatively, the deformation could be "too small" for the force value applied, and thus indicate an excessively rigid tyre.

The constant measurement of the height of the reference circumference makes it possible to discern the uncertain cases as well as possibly to determine in what lateral portion of the tyre the defect is present.

Preferably, it is provided for to keep the tool height of said measuring surfaces substantially constant along said at least one complete rotation about said rotation axis; to measure the tool force exerted by said tool on said measuring surface at a plurality of relative angular positions between said tyre and said tool along said complete rotation; and wherein determining whether said tyre has a defect based on said height of said reference circumference and based on said tool force exerted by said tool during said pushing action includes classifying said tyre as including a defect if at least one value of said measured tool force exerted on at least one measuring surface in said complete rotation is outside of a predetermined range of force values.

In an analogous way to the case with constant force, if for a set tool height the tool force to be applied to reach such a tool height were excessive or too low, this probably indicate a defect in the tyre that is respectively too weak or too rigid.

The constant measurement of the height of the reference circumference makes it possible to discern the uncertain cases as well as possibly to determine in what lateral portion the defect is present.

Preferably, a second height sensor is provided that is adapted to measure a height of said measuring surfaces at a plurality of relative angular positions between said tyre and said tool along said complete rotation.

Preferably, a force sensor is provided that is adapted to measure a tool force applied by said tool to said measuring surfaces during said complete rotation.

A second height sensor is preferred in order to be able to determine the tool height of the measuring surface, so as to determine the depression thereof. Such a sensor can preferably include a laser pointer.

A force sensor is adapted for measuring the tool force during the rotation so as to highlight changes or values thereof that can help to detect the presence of defects.

Preferably, the control unit is programmed to process a signal coming from said second height sensor so as to determine said tool height during said rotation.

Preferably, the control unit is programmed to process a signal coming from said force sensor so as to determine said tool force during said rotation.

Preferably, the control unit is programmed to indicate said tyre as including a defect based on said height of said reference circumference and based on said tool height of said measuring surface and/or said tool force exerted by said tool.

The presence of defects is preferably evaluated based on a combination of signals, i.e. of tool force or of tool height that help to understand the greater or lesser rigidity of the tyre and the height of the reference circumference.

Preferably, said control unit is adapted for controlling said first positioning actuator so that said tool applies a substantially constant tool force against said measuring surface during said rotation or positions said measuring surface at a substantially constant tool height with respect to said support plane during said rotation.

The measurement is preferably carried out either at constant tool height during the rotation, or at constant tool force.

Preferably, said first height sensor includes a video camera.

More preferably, said video camera is a 2D video camera.

Even more preferably, said video camera is adapted for detecting images of said reference circumference and for sending said images to said control unit.

A video camera of such a type, having a sufficient speed to acquire a plurality of images at the desired rotation speed of the tyre, is present on the market and therefore easy to acquire. It also ensures a high precision of measurement, a measurement that is preferably carried out through comparison of images.

Preferably, said tool includes a thrusting roller.

More preferably, the thrusting roller is mounted so as to be able to rotate freely about its own axis.

Advantageously, the deformation takes place through the roller rested against the measuring surface of the tyre. The roller, being able to rotate, keeps the surface compressed for a rotation of the tyre about its rotation axis, so that the same surface can be checked in any angular position. When the tyre is set in rotation, the position of the roller remains the same, rotating about its axis due to the rotation of the surface of the tyre with which it is in contact.

Preferably, said positioning actuator operatively associated with the tool includes a linear motor.

Through a linear electric motor a fine adjustment of the position of the tool and of its distance from the outer surface of the tyre is possible.

Preferably, said positioning actuator includes said second height sensor and said first force sensor.

In the case of the linear motor, these features are already generally present as output of the motor itself, therefore minimizing the number of components to be implemented in the apparatus.

Further features and advantages of the invention will become clear from the following description of a method and an apparatus for checking tyres according to the invention given for indicating and not limiting purposes with reference to the attached figures, in which:

- figure 1 is a schematic perspective view of an apparatus according to the present invention;
- figure 2 is a schematic side section view of the apparatus of figure 1 in a different operating condition;
- figure 3 is a schematic section view of a tyre as arranged in an apparatus according to the present invention;
- figure 4a represents graphs in which the abscissae show the angular position of a plurality of measuring surfaces of a tyre devoid of defects and the ordinates show the value of an output datum corresponding to the height of a free portion of the tyre following the application of a substantially constant height as well as the value of the height of the reference circumference and the value of the depression of the reference circumference; the measurements are carried out for the side A of the tyre;
- figure 4b represents graphs in which the abscissae show the angular position of a plurality of measuring surfaces of the tyre with a weak sidewall defect and the ordinates show the value of an output datum corresponding to the height of a free portion of the tyre following the application of a substantially constant force as well as the value of the height of the reference circumference and the value of the depression of the reference circumference; the measurements are carried out for the side A of the tyre;
- figure 4c represents graphs in which the abscissae show the angular position of a plurality of measuring surfaces of the tyre with a different weak sidewall defect and the ordinates show the value of an output datum corresponding to the height of a free portion of the tyre following the application of a substantially constant height as well as the value of the height of the reference circumference and the value of the depression of the reference circumference; the measurements are carried out for the side A of the tyre;
- figure 5 is a schematic view from above of a tyre in a step of the method of the invention; and
- figure 6 is a schematic side section view of the tyre of figure 5 in a further step of the method of the invention.

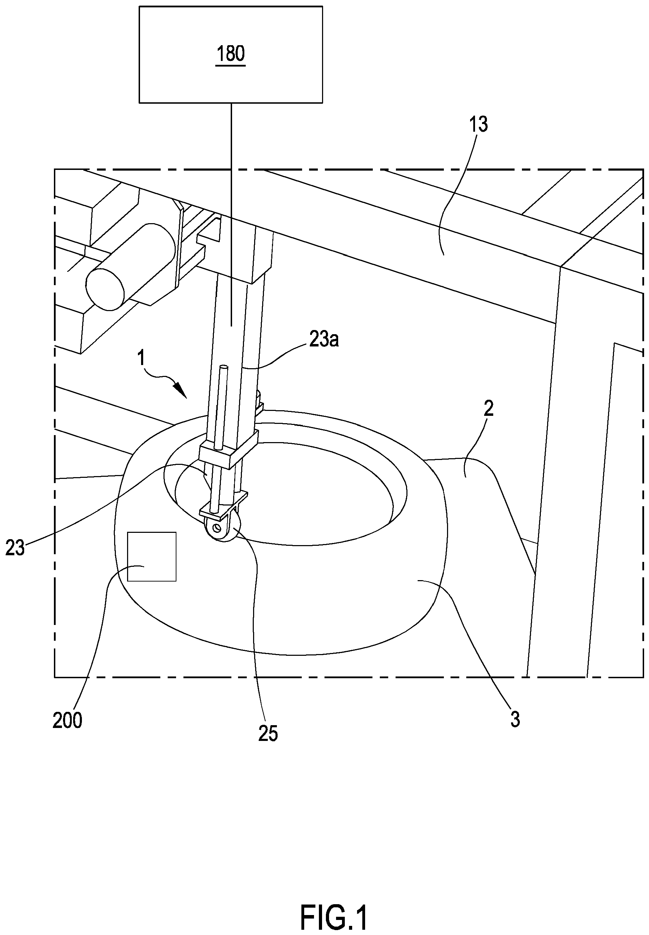

With reference to the attached figures, and in particular initially to figures 1 to 3, reference numeral 1 wholly indicates an apparatus for checking tyres in accordance with the present invention.

Reference numeral 2 indicates a support plane, preferably horizontal, configured to receive a tyre 3 arranged with axial middle plane 4 substantially parallel to the support plane.

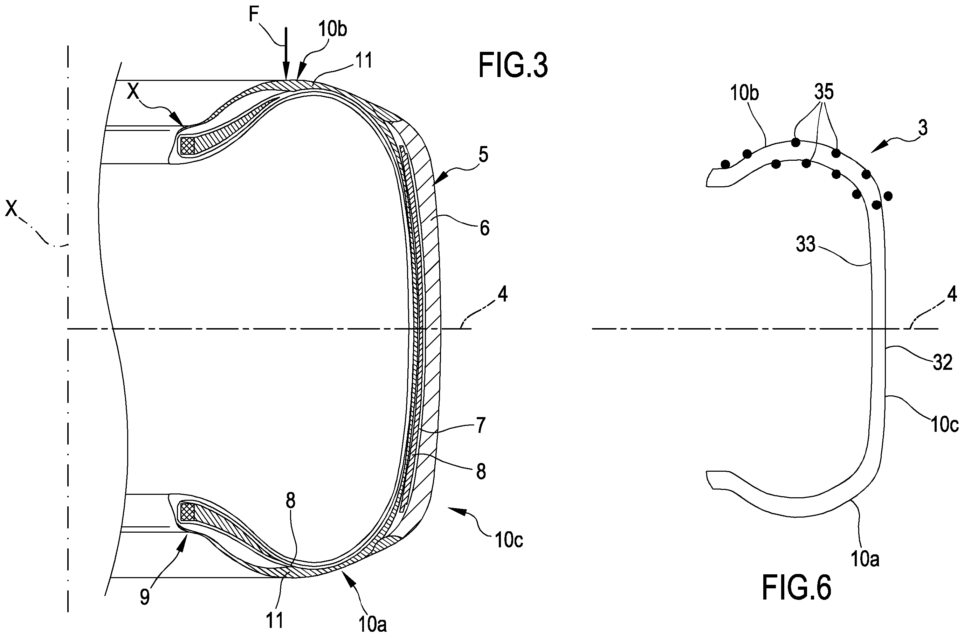

The tyre 3, having rotation axis X, comprises (see in particular figure 3) a crown portion 10c arranged substantially perpendicular to the axial middle plane 4, in a radially outer area of the tyre. Such a crown portion 10c comprises a tread band 6, a belt structure 7 and portions of a carcass structure 8 arranged radially inner with respect to the tread band 6.

The tyre 3 also comprises two anchoring portions 9 arranged radially inner and respectively on opposite sides of the axial middle plane 4. The anchoring portions 9 are configured so as to engage with the rim of a wheel.

The tyre 3 also comprises two lateral portions 10a, 10b that respectively extend from axially opposite sides of the axial middle plane 4 between each of the anchoring portions 9 and the crown portion 10c. Every lateral portion corresponds to a sidewall 11 and to portions of the carcass structure 8 arranged in axially inner position with respect to the sidewall 11.

When the tyre 3 is rested on the support plane 2 one of the two lateral portions of the tyre, for example the lateral portion 10a, is directly in contact with the aforementioned support plane 2 defining a support lateral portion 10a. The other of the two lateral portions of the tyre, in the figures the lateral portion 10b, is arranged at a certain height with respect to the support plane defining a free lateral portion 10b.

The support plane 2 is arranged inside a frame 13, schematically and partially visible in figure 1, with respect to which it can rotate about an axis coinciding with the rotation axis X of the tyre rested on it. The apparatus 1 also comprises devices for setting the support plane 2 in rotation with respect to the frame 13, not illustrated.

The apparatus for checking tyres 1 includes, in addition to the frame 13 and to the support plane 2, a tool 23, moved by a positioning actuator 23a, adapted for resting and for pushing, deforming, a portion of the tyre 3, and in particular for resting and deforming a part of the free lateral portion 10b.

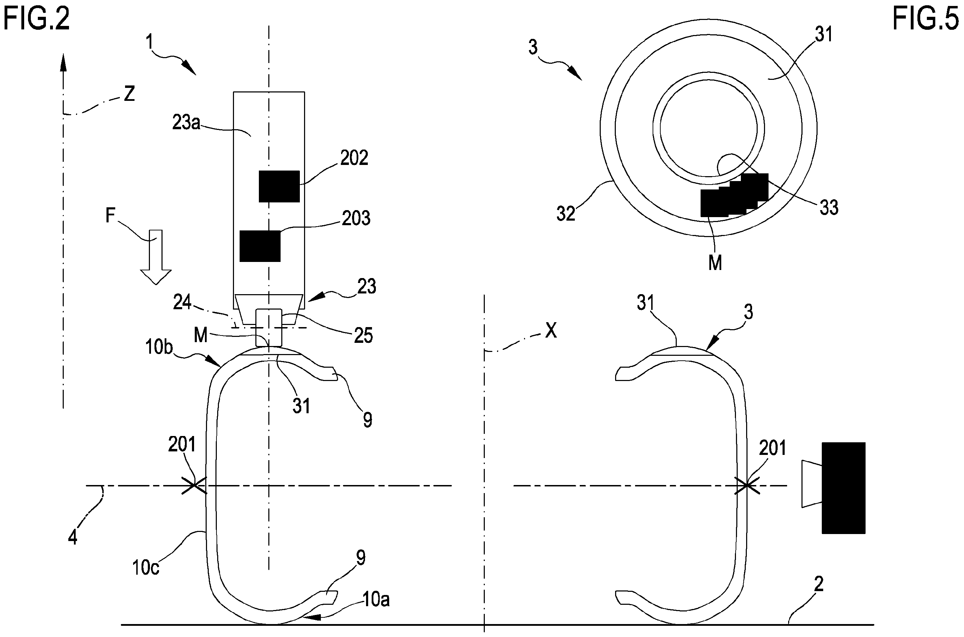

Preferably, the tool 23 comprises a roller 25 arranged with rotation axis 24 preferably horizontal and, in use, oriented substantially according to a radial direction of the tyre resting on the support plane 2 (see for example the configuration represented in figure 2).

The tool 23, through the positioning actuator 23a, is configured to be pushed against the free lateral portion 10b along a pushing direction so as to apply a force F on a measuring surface M on the free portion of the tyre. The force F applied by the tool 23 is called tool force. Preferably, the pushing direction comprises a component along a vertical axis, for example parallel to the axis Z as depicted in figure 2. Such an axis is called "approach direction" hereinafter. The positioning actuator 23a preferably includes a linear motor (not depicted).

The apparatus 1 also comprises a control unit 180 in which a three-dimensional profile of at least one portion of the tyre 3 is saved, for example in a suitable non-visible memory. With reference to figures 5 and 6, such a portion comprises at least one ring-shaped surface 31, having substantially the shape of a toric section, better described hereinafter.

As can be seen in the schematic representation of figure 5, the tyre 3 is delimited by an outer surface 32 and by an inner surface 33 that constitute in every section of the tyre the perimeter edge thereof. The tool 23, and in particular the roller 25, is adapted for making contact with a portion of the outer surface 32 at the free lateral portion 10b called, as written above, measuring surface M. Moreover, since preferably during checking the tyre is set in rotation with respect to the tool 23, as detailed hereinafter, a ring-shaped surface of the outer surface of the free lateral portion 10b comes into contact with the roller 25.

Therefore, in order that the roller 25 touches the tyre in a surface portion of which a three-dimensional profile has been acquired, such a profile comprises at least the ring-shaped surface 31.

Preferably, the control unit 180 is also adapted for controlling the tool 23 towards and away from the tyre 3, as well as for adjusting the tool force F to be applied to the surface of the tyre 3. The tool force F to be applied preferably depends preferably on the tyre type and/or model. Therefore, for example in the same memory in which the three-dimensional profile of the tyre is stored, a database is also preferably saved in which for every tyre type and/or model a value of the tool force F to be applied is associated.

The three-dimensional profile saved in the memory of the control unit 180 includes for example a plurality of sections like that of figure 6, which can consist of continuous lines or a plurality of discreet points, for example indicated with 35, the envelope of which describes the ring-shaped surface 31. Preferably, a three-dimensional profile of the entire inner surface 33 and of the entire outer surface 32 is present in the memory of the control unit 180.

The apparatus 1 also includes a first height sensor 200, for example a 2D or 3D video camera, arranged so as to visualize a portion of the crown portion 10c of the tyre. In figures 1 and 2, the first height sensor 200 is positioned opposite the outer surface 32 of the tyre 3 at the tread band 6.

A reference circumference 201, indicated in a simplified manner in the section of figure 2 with two crosses, is identified in the portion of outer surface of the tread band that is visualized by the first height sensor 200 during a rotation of the tyre. The reference circumference indicates the presence of a plurality of reference points, all at the same rest height from the support plane 2 that can be identified as "reference" on the outer surface of the tread band 6 through the first height sensor 200.

Furthermore, the apparatus 1 includes a second height sensor 202 and a first force sensor 203, schematically indicated in figure 2, which can either be part, as indicated, of the tool 23 or of the positioning actuator 23a, for example part of the linear motor that automatically measures tool force applied on the measuring surface M and height to which the measuring surface M is taken when the tool 23 compresses the measuring surface itself whenever the tool touches the lateral portion 10b of the tyre. Alternatively, the second height sensor and the first force sensor are outside of the tool 23 (preferred example, not depicted). For example, in order to detect the height of the free lateral portion 10b, the apparatus 1 can comprise a linear position transducer (not illustrated) suitable for detecting the positions of the tool 23.

In use, a tyre 3 is arranged on the support plane 2 with axial middle plane 4 substantially parallel to the support plane itself, so as to define the support lateral portion 10a and the free lateral portion 10b.

Since the three-dimensional profile of the tyre 3 is known, its spatial position and therefore also its position relative to the support plane 2 are known. In other words, the height at which the measuring surfaces M are located at rest before the compression and deformation caused by the tool 23 is known.

In order to apply the tool force F directed towards the support plane 2 to a measuring surface of the free lateral portion 10b, part of the ring-shaped surface 31, the tool 23 is positioned with respect to the free lateral portion 10b at the vertical on the measuring surface. The positioning does not require the detection of the position of the "upper edge" of the tyre, since such a position is preferably known from the three-dimensional profile. Thereafter, an approach stroke to the free lateral portion 10b is activated, bringing the tool 23 towards the tyre 3, through the positioning actuator 23a. The movement takes place through movement of the linear motor (not depicted). Finally, a pushing stroke of the tool 23 against the free lateral portion 10b is activated.

In greater detail, the tool force F applied has at least one component parallel to the rotation axis X of the tyre.

The movement of the tool 23 can take place for example through a first radial translation and a second translation along the axis Z towards the tyre.

The initial radial translation of the tool 23 is carried out based on the size of the tyre until the tool 23 is positioned with respect to the free lateral portion 10b at the vertical on the selected measuring surface. In other words, the translation is carried out until the radial position corresponding to the desired measuring surface is reached. The measuring surface M is for example arranged at the area of the free lateral portion 10b of the tyre arranged at the greater height with respect to the support plane 2 before the application of the force F. Preferably, the measuring surface is arranged at the axially outer area of the free lateral portion 10b of the tyre.

Once the desired radial position has been reached, through the positioning actuator 23a the approach stroke to the free lateral portion 10b is activated bringing the tool 23 towards the tyre 3 along the axis Z.

The approach stroke is blocked when the outer surface 32 of the tyre 3 is reached, the rest height of which is known since the three-dimensional profile of the tyre is known.

The rest height of the reference circumference 201, if it is not yet known, is also measured through the first height sensor 200.

The tool 23 is thus brought into contact with the free lateral portion 10b, of known rest height. The positioning actuator 23a is taken to the desired thrust pressure so as to activate the pushing stroke of the tool 23 against the free lateral portion 10b and exert the force F. The value of the force F is determined for example by recovering such a value from the database present in the control unit 180. The value F depends on the tyre type and/or model that has been arranged on the support plane 2. However, it is possible to provide for a manual insertion of the value of the force F or a change of the preset value of the force F. The measuring surface M corresponds to the surface of the free lateral portion 10b in contact with the tool 23.

Possibly, the tyre can be either inflated or deflated during the application of the force.

Two types of measurement are possible: in a first preferred example, the set tool force F is kept constant during measurement. Alternatively, the tool 23 is taken to a height kept constant during the measurement. In other words, the measuring surface M is deformed until it reaches a predetermined height called tool height. The predetermined tool height for example is calculated as

$$\text{Tool height} = \text{rest height} - D$$

where D is a predetermined constant.

D (which can be equated to a depression) for example is comprised between 5 mm and 30 mm.

The support plane 2 is set in rotation about the rotation axis X of the tyre 3 maintaining the contact between the tool 23 and the free lateral portion 10b of the tyre to be checked. The tool 23 keeps either the tool force F constant or the tool height constant and the roller 25 rotates on the free lateral portion 10b during the rotation. Preferably, the constant tool force or the constant tool height is maintained for at least one complete rotation of 360°.

The value of the tool force F or of the tool height applied is preferably kept substantially constant along at least one complete rotation of the tyre 3 about the rotation axis, so that the measuring surfaces M grouped together form the substantially ring-shaped surface 31. For example, the value of the tool force applied F can be comprised between about 10 N and about 150 N. A range of the tool height is for example about 200 mm wide.

Therefore, during pressure at substantially constant tool force or at substantially constant tool height for a relative rotation of 360° between tool and tyre, the height/force of the deformed surface portion of the tyre is detected. This height/force is detected either continuously (i.e. obtaining a continuous line of heights/forces) or at intervals, preferably regular, for example every 0.1 radians, or also in an equivalent manner every 0.2 seconds considering a substantially constant rotation speed of the tyre.

In a further preferred example, it is possible to pass from a configuration in which a constant tool height is set during the rotation, to a configuration with constant tool force. For this purpose a maximum tool force Fmax able to be withstood by the tyre 3 without undergoing irreversible deformations or in any case damage is set, for every type of tyre. In the case in which a constant tool height is set, if to reach such a height the tool force should exceed or equal Fmax before reaching the set tool height, the tool stops its movement along the axis Z, and does not reach the desired tool height. The measurement proceeds keeping the tool force constant during the rotation and equal in value to the maximum tool force.

It is preferable for the measuring surface M to be arranged a substantially constant distance from the rotation axis. Therefore, the roller 25 makes contact with a plurality of measuring surfaces M, all part of the ring-shaped surface 31. A plurality of measuring surfaces M angularly spaced apart from one another is thus defined, as exemplified in figure 5, where every measuring surface M is indicated with a rectangle.

In accordance with a possible embodiment, in the case in which the tool force F is kept substantially constant during the rotation, the tool height of the free lateral portion 10b of the tyre 3 is detected by the second height sensor 202 at every position taken up by the roller on a distinct measuring surface M.

Similarly, in the case in which the tool height F is kept substantially constant during the rotation, the tool force applied by the tool on the free lateral portion 10b of the tyre 3 is detected by the first force sensor 203 at every position taken up by the roller on a distinct measuring surface M.

In the same rotation of at least 360°, during the application of the tool force on the measuring surfaces M, both at constant tool force and at constant tool height, the height of the reference circumference 201 is measured by the first height sensor 200. Compression and deformation of the free lateral portion 10b indeed correspond to a deformation of the support lateral portion 10a, and thus to a translation along the axis Z of the reference circumference 201 that before the deformation was at a rest height.

The circumference 201 is therefore taken to a different height, which can be equal along the entire rotation or vary angularly. The measurement of the height of the reference circumference 201 is always carried out through the first height sensor 200. For example, the sensor 200, including a 2D or 3D video camera, detects a plurality of images, angularly spaced apart, during the rotation of the tyre. The images are compared with corresponding images detected when no deformation was applied and therefore a height difference, defined as:

$$\text{height difference} = \text{circumference height at rest} - \text{height difference during deformation,}$$

is calculated.

More precisely, the comparative images relative to the same tyre in the absence of deformation can be present in a database or obtained (and stored in a suitable memory unit) through a complete rotation of the tyre preceding the rotation in which the aforementioned tool force is applied on the measuring surfaces M.

Advantageously, the control unit 180 of the apparatus 1 is programmed to detect the value of the tool height at every position of the roller 25 on the corresponding measuring surface, when the value of the tool force F is always substantially constant. Similarly, the control unit 180 of the apparatus 1 is programmed to detect the value of the tool force at every position of the roller 25 on the corresponding measuring surface, when the value of the tool height is always substantially constant. Furthermore, in both cases, the control unit is programmed to detect the value of the height of the reference circumference during the application of the tool force/tool height.

In an example, the height of the reference circumference 201 during the compression determines whether or not a tyre is to be discarded. In fact, if for example a constant tool height is fixed, given the constant value of the tool height and the measured value of the height of the reference circumference, it is possible to calculate the ratio between the tool height and the depression of the reference circumference. Through this ratio it is possible to establish for example whether the weak sidewall condition is present. Furthermore, it is possible to establish on what sidewall, i.e. if on the free lateral portion 10b or the support portion 10a, the defect is present.

More preferably, the value of the height of the circumference during the deformation is used together with other measured parameters, such as the tool height or the tool force, to limit the number of measurements necessary to highlight the presence of defects or to establish the presence of a defect in uncertain cases.

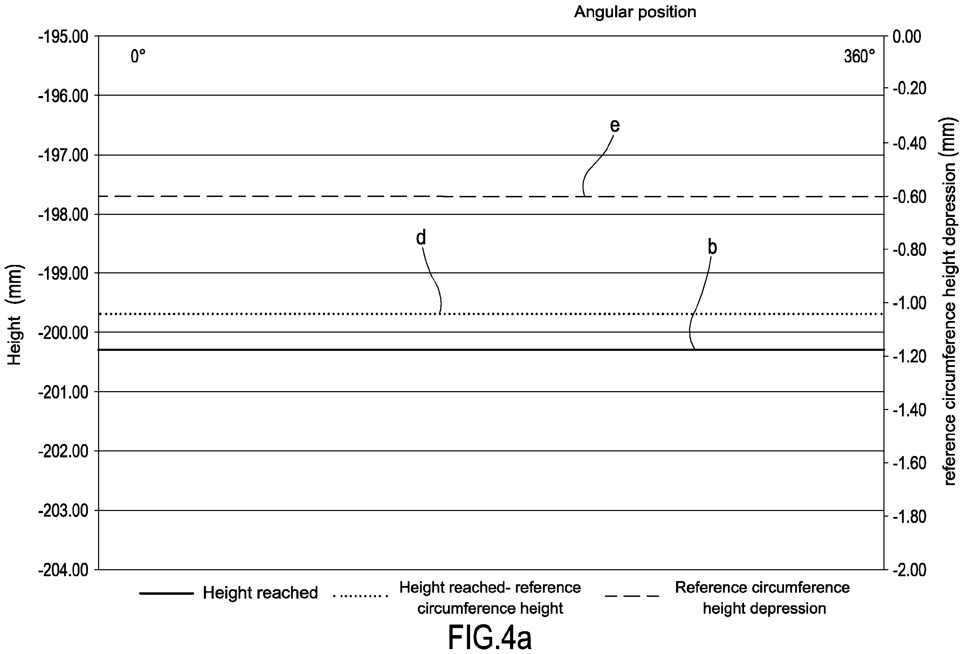

According to the invention, the tool height and tool force parameters are measured for three tyres on a single side (side A). In addition, the depression of the reference circumference 201 is measured. The measurements are given in the graphs of figures 4a - 4c.

Figure 4a represents the measurements relative to a tyre devoid of defects. The curve b relative to the tool height actually reached kept constant during the rotation is shown. Moreover curve d represents the difference:

$$\text{Tool height reached} - \text{reference circumference height during the compression.}$$

For the curves b and d, the representative ordinate is the one on the left. The difference between the height of the reference circumference 201 at rest and that during the deformation (curve e) is thus calculated, the representative ordinate of which is the one on the right. The value of this difference, and/or its ratio with the depression of the measuring surface M determines whether or not there are defects. In this case, the depression of the reference circumference is considered "normal", which, combined with the fact that the tool height is reached with force values also within an acceptable range (thanks to the measurement of said tool force and tool height parameters), ensures that the tyre in object can be considered as devoid of defects on the lateral portions. The measurements carried out on the height of the reference circumference avoid having to invert the tyre and also measure side B.

The data of the measurements carried out for side A are given below:

SIDE A

ZERO VALUE OF THE TYRE (LIKE FOR EXAMPLE FROM DATABASE): -188.70 mm

DESIRED SIDEWALL HEIGHT: -202 mm
SIDEWALL HEIGHT REACHED (curve b in figure 4a): - 200. 3 mm
DEPRESSION (HEIGHT REACHED- ZERO HEIGHT): -11.60 mm
REFERENCE CIRCUMFERENCE DEPRESSION IN THE TREAD (curve e in figure 4a): - 0.6 mm

From the above measurements (figure 4a) it is possible to determine a depression of the reference circumference considered acceptable for a tyre without defects in the sidewall.

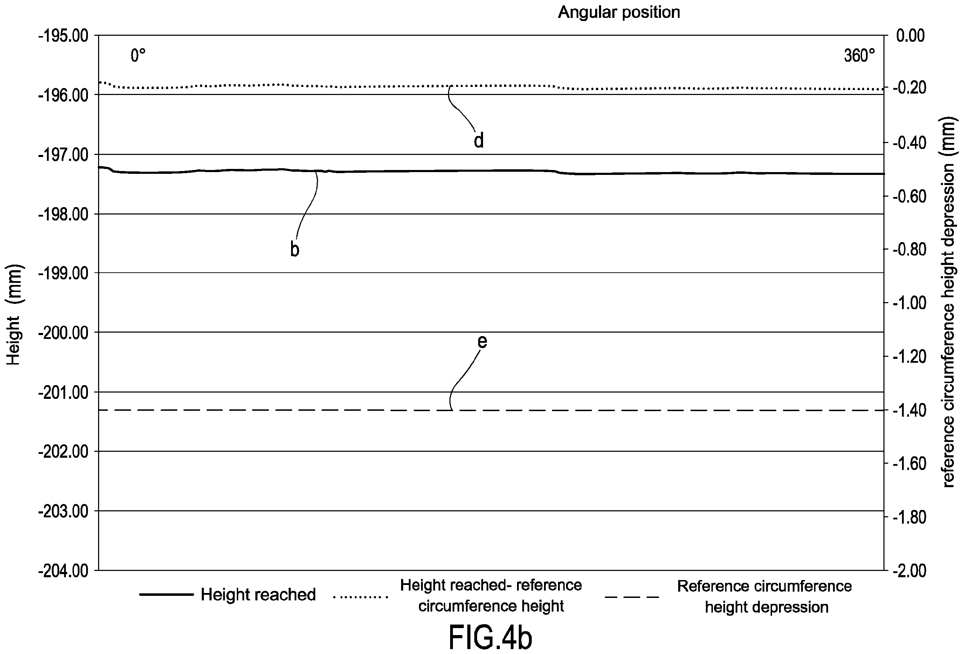

Figure 4b represents the measurements relative to a tyre with a weak sidewall. The curve b relative to the tool height actually reached kept constant during the rotation is shown. Moreover, curve d represents the difference:

# Tool height reached – reference circumference height during the compression.

For curves b and d, the representative ordinate is the one on the left. The difference between the height of the reference circumference 201 at rest and that during the deformation is thus calculated (curve e), the representative ordinate of which is the one on the right. The value of this difference, and/or its ratio with the depression of the measuring surface M determines whether or not there are defects. In this case, the depression of the reference circumference is considered "above normal", which means that the sidewall resting on the plane, i.e. the sidewall corresponding to side B yields substantially. However, the sidewall corresponding to side A does not yield easily, since the desired height is not reached with the maximum applicable force. This leads one to think that the sidewall corresponding to side B is a weak sidewall.

The data of the measurements carried out for side A are given below:

SIDE A

ZERO VALUE OF THE TYRE (LIKE FOR EXAMPLE FROM DATABASE): -185.60 mm
DESIRED SIDEWALL HEIGHT: -202 mm
SIDEWALL HEIGHT REACHED (curve b in figure 4b): - 197.3 mm
DEPRESSION (HEIGHT REACHED- ZERO HEIGHT): -11.70 mm
REFERENCE CIRCUMFERENCE DEPRESSION IN THE TREAD (curve e in figure 4b): - 1.4 mm

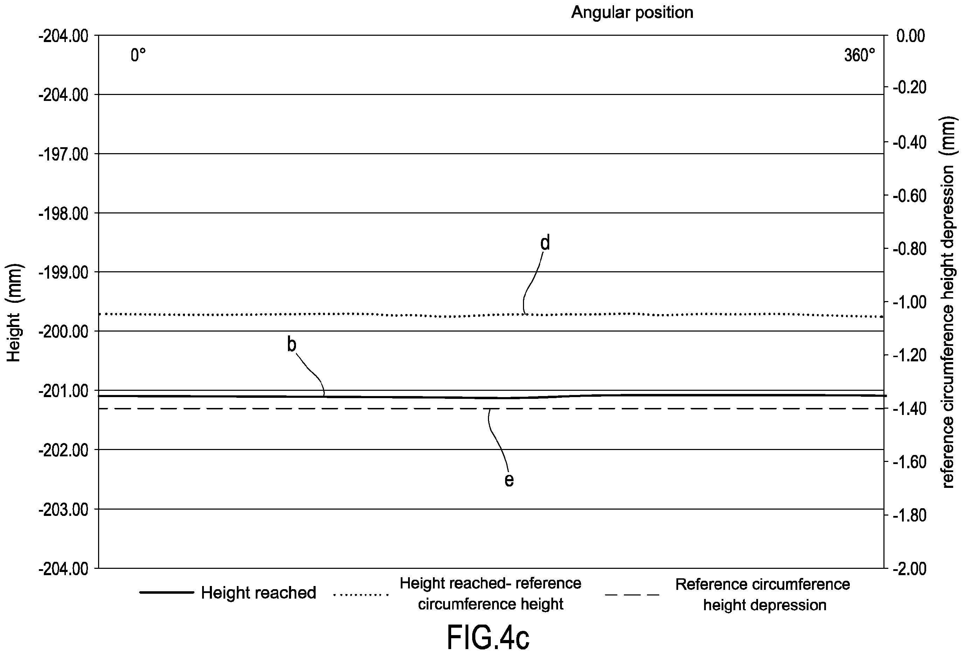

Figure 4c represents the measurements relative to a tyre with a double weak sidewall. The curve b relative to the tool height (actually reached) kept constant during the rotation is shown. Moreover, curve d represents the difference: Tool height reached - reference circumference height during the compression.

For curves b and d, the representative ordinate is the one on the left. The difference between the height of the reference circumference 201 at rest and that during the deformation (curve e) is calculated, the representative ordinate of which is that one on the right. The value of this difference, and/or its ratio with the depression of the measuring surface M determines whether or not there are defects. In this case, the depression of the reference circumference is considered "above normal", which means that the sidewall resting on the plane, i.e. the sidewall corresponding to side B yields substantially. However, the sidewall corresponding to side A also yields easily, since the desired height is reached with a relatively low force. This leads one to think that both of the sidewalls are weaker than normal, i.e. there is a double weak sidewall.

The data of the measurements carried out for side A are given below:

SIDE A

ZERO VALUE OF THE TYRE (LIKE FOR EXAMPLE FROM DATABASE): -187.10 mm
DESIRED SIDEWALL HEIGHT: -202 mm
SIDEWALL HEIGHT REACHED (curve b in figure 4c): - 201 mm
DEPRESSION (HEIGHT REACHED- ZERO HEIGHT): -13.90 mm
REFERENCE CIRCUMFERENCE DEPRESSION IN THE TREAD (curve e in figure 4c): - 1.4 mm

**Claims**

1. Method for checking tyres, comprising:
   ○ arranging a tyre (3) having a rotation axis (X) on a support plane (2) defining a support lateral portion (10a), a free lateral portion (10b) arranged at a certain height with respect to said support plane (2), and a crown portion (10c) arranged between the free lateral portion (10b) and the support lateral portion (10a); **characterized in that** the method further comprises :

○ selecting a reference circumference (201) of said tyre arranged at said crown portion (10c);
○ bringing a tool (23) towards said tyre (3) arranged on the support plane (2) so as to rest on a measuring surface (M), said measuring surface (M) being a portion of an outer surface (32) of said free lateral portion (10a);
○ pushing said measuring surface by means of said tool (23) so as to apply a tool force (F) on said measuring surface (M) towards the support plane (2) creating a deformed measuring surface positioned at a tool height;
○ during said pushing action, setting said tyre (3) in relative rotation with respect to said tool for at least one complete rotation about said rotation axis (X);
○ measuring a height of said reference circumference (201) during said complete rotation; and
○ determining whether said tyre (3) has a defect based on said measured height of said reference circumference (201).

2. Method according to claim 1, including:
○ measuring said tool height of said measuring surface (M) along said complete rotation and/or measuring the tool force (F) exerted by said tool (23) on said measuring surface (M) along said complete rotation;
and wherein the method further comprises determining whether said tyre (3) has a defect based on said measured tool height and/or on said measured tool force (F).

3. Method according to claim 2, including:

○ keeping the tool force (F) exerted along said at least one complete rotation around said rotation axis (X) substantially constant;
○ measuring said tool height of said measuring surface (M) at a plurality of relative angular positions between said tyre (3) and said tool (23) along said complete rotation; and
○ wherein determining whether said tyre (3) has a defect based on said height of said reference circumference and based on said tool height of said measuring surface (M) includes classifying said tyre as including a defect if at least one measured tool height in said complete rotation is outside of a predetermined range of height values.

4. Method according to claim 2, including:

○ keeping the tool height substantially constant along said at least one complete rotation around said rotation axis (X);
○ measuring the tool force (F) exerted by said tool (23) on said measuring surface at a plurality of relative angular positions between said tyre and said tool along said complete rotation; and
○ wherein determining whether said tyre has a defect based on said height of said reference circumference (201) and based on said tool force (F) exerted by said tool includes classifying said tyre as including a defect if at least one value of said measured tool force (F) exerted on at least one measuring surface in said complete rotation is outside of a predetermined range of force values.

5. Method according to claim 1 or 2, including:

○ keeping the tool force (F) exerted along said at least one complete rotation around said rotation axis (X) substantially constant or keeping the tool height substantially constant along said at least one complete rotation around said rotation axis (X).
○ .

6. Method according to one or more of the previous claims, including:

○ setting a desired tool height value to which said deformed surface is to be brought;
○ setting a maximum tool force value (Fmax);
○ pushing said measuring surface by means of said tool so that said measuring surface (M) reaches said desired tool height;
○ measuring said tool force during said pushing action;
○ locking said pushing action if said tool force reaches and/or exceeds said maximum tool force; and
○ maintaining said maximum tool force along said at least one complete rotation around said rotation axis (X).

7. Method according to one or more of the previous claims, including:

○ providing a database including a plurality of tyre models, each tyre model of the plurality being associated with a rest height of said free lateral portion (10b);
◦ determining the tyre model arranged on the support plane (2);
◦ recovering a value of said rest height from said database and associated with the determined tyre model;
◦ pushing said measuring surface (M) by means of said tool up to said tool height from said rest height as recovered from said database or pushing said measuring surface by means of said tool from said rest height as recovered from said database with said tool force.

8. Method according to one or more of the previous claims, including:

◦ obtaining a rest height of said reference circumference (201);
◦ determining a difference between said rest height and said tool height during said complete rotation; and
◦ determining whether said tyre (3) has a defect on said support lateral portion or on said free lateral portion based on said difference,

wherein determining whether said tyre (3) has a defect on said support lateral portion (10a) or on said free lateral portion (10b) based on said difference includes determining whether said difference is greater than a first threshold or said difference is less than a second threshold.

9. Method according to claim 8, including:

◦ detecting a first image of a portion of said reference circumference at rest;
◦ detecting a second image of a portion of said reference circumference during said rotation in a same angular position in which said first image was detected;
◦ determining said difference by comparing said first and said second image.

10. Apparatus (1) for checking tyres (3), the apparatus comprising:

◦ a support plane (2) on which said tyre (3) is adapted for being rested, said tyre thus internally defining a support lateral portion (10a), a free lateral portion (10b) arranged at a certain height with respect to said support plane (2), and a crown portion (10c) arranged between the free lateral portion (10b) and the support lateral portion (10a);
◦ a tool (23) configured to apply a tool force (F) facing towards the support plane (2) to a measuring surface (M) of said free lateral portion (10b) of the tyre (3) so as to bring it to a tool height;
◦ a positioning actuator (23a) operatively associated with the tool (23) and configured to move said tool towards said tyre (3);
◦ a rotation device to relatively modify the angular position of the

measuring surface with respect to the tool (23); **characterized in that** the apparatus further comprises :

◦ a first height sensor (200), adapted for measuring a height of a reference circumference (201) identified in said crown portion (10c) of said tyre;
◦ a control unit (108) programmed to

▪ send a command to said positioning actuator (23a) so as to bring said tool (23) towards said tyre arranged on the support plane so as to rest on said measuring surface, and push said measuring surface (M) by means of said tool (23) so as to apply said tool force on said measuring surface towards the support plane (2);
▪ during said pushing action sending a command to said rotation device to set said tyre (3) in relative rotation with respect to said tool (23);
▪ processing a signal coming from said first height sensor (200) so as to measure a height of said reference circumference during said rotation;
▪ indicating said tyre (3) as including a defect based on said measured height of said reference circumference (201).

11. Apparatus (1) according to claim 10, including:

◦ a second height sensor (202) adapted for measuring a height of said measuring surface (M) at a plurality of relative angular positions between said tyre (3) and said tool along said complete rotation; and/or
◦ a force sensor (203) adapted for measuring a tool force applied by said tool (23) to said measuring surface (M) during said complete rotation,

° wherein said positioning actuator (23a) includes said second height sensor (202) and said first force sensor (203).

12. Apparatus (1) according to claim 11, wherein said control unit (108) is programmed to

° processing a signal coming from said second height sensor (202) so as to determine said tool height during said rotation; and/or
° processing a signal coming from said force sensor (203) so as to determine said tool force during said rotation; and
° indicating said tyre (3) as including a defect based on said height of said reference circumference (201) and based on said tool height of said measuring surface (M) and/or said tool force exerted by said tool.

13. Apparatus (1) according to one or more of claims 10 to 12, wherein said control unit (108) is adapted for driving said first positioning actuator (23a) so that said tool (23) applies a substantially constant tool force against said measuring surface (M) during said rotation or positions said measuring surface (M) at a substantially constant tool height with respect to said support plane (2) during said rotation.

14. Apparatus (1) according to one or more of claims 10 to 13, wherein said first height sensor (200) includes a video camera, said video camera being adapted for detecting images of said reference circumference (201) and for sending said images to said control unit (108).

15. Apparatus (1) according to one or more of claims 10 to 14, wherein said tool (23) includes a thrusting roller (25) and the thrusting roller (25) is mounted so as to be able to rotate freely about its own axis (24).

**Patentansprüche**

1. Verfahren zur Überprüfung von Reifen, umfassend:
° Anordnen eines Reifens (3) an einer Trägerebene (2), wobei der Reifen eine Drehachse (X) aufweist und einen seitlichen Trägerabschnitt (10a), einen freien seitlichen Abschnitt (10b), der an einer gewissen Höhe in Bezug auf die Trägerebene (2) angeordnet ist, und einen Zenithabschnitt (10c) definiert, der zwischen dem freien seitlichen Abschnitt (10b) und dem seitlichen Trägerabschnitt (10a) angeordnet ist; **dadurch gekennzeichnet, dass** das Verfahren ferner umfasst:

° Auswählen eines Referenzumfangs (201) des Reifens, der an dem Zenithabschnitt (10c) angeordnet ist;
° Heranführen eines Werkzeugs (23) an den Reifen (3), der an der Trägerebene (2) angeordnet ist, so dass es an eine Messoberfläche (M) anliegt, wobei die Messoberfläche (M) ein Abschnitt einer äußeren Oberfläche (32) des freien seitlichen Abschnitts (10a) ist;
° Drücken gegen die Messoberfläche mittels des Werkzeugs (23), um eine Werkzeugkraft (F) auf die Messoberfläche (M) zu der Trägerebene (2) hin auszuüben, was eine verformte Messoberfläche erzeugt, die an einer Werkzeughöhe positioniert ist;
° Versetzen des Reifens (3) während des Drückvorgangs in relative Drehung in Bezug auf das Werkzeug für zumindest eine vollständige Drehung um die Drehachse (X);
° Messen einer Höhe des Referenzumfangs (201) während der vollständigen Drehung; und
° Bestimmen, ob der Reifen (3) einen Defekt aufweist, auf Grundlage der gemessenen Höhe des Referenzumfangs (201).

2. Verfahren nach Anspruch 1, das beinhaltet:

° Messen der Werkzeughöhe der Messoberfläche (M) entlang der vollständigen Drehung und/oder Messen der Werkzeugkraft (F), die durch das Werkzeug (23) auf die Messoberfläche (M) entlang der vollständigen Drehung ausgeübt wird; und wobei das Verfahren ferner das Bestimmen, ob der Reifen (3) einen Defekt aufweist, auf Grundlage der gemessenen Werkzeughöhe und/oder der gemessenen Werkzeugkraft (F) umfasst.

3. Verfahren nach Anspruch 2, das beinhaltet:

° dass die Werkzeugkraft (F), die entlang der zumindest einen vollständigen Drehung um die Drehachse (X) ausgeübt wird, im Wesentlichen konstant gehalten wird;

◦ dass die Werkzeughöhe der Messoberfläche (M) an einer Vielzahl von relativen Winkelpositionen zwischen dem Reifen (3) und dem Werkzeug (23) entlang der vollständigen Drehung gemessen wird; und
◦ wobei das Bestimmen, ob der Reifen (3) einen Defekt aufweist, auf Grundlage der Höhe des Referenzumfangs und auf Grundlage der Werkzeughöhe der Messoberfläche (M), beinhaltet, dass der Reifen als einen Defekt aufweisend klassifiziert wird, wenn zumindest eine gemessene Werkzeughöhe bei der vollständigen Drehung außerhalb eines vorbestimmten Bereichs von Höhenwerten liegt.

4. Verfahren nach Anspruch 2, das beinhaltet:

◦ dass die Werkzeughöhe entlang der zumindest einen vollständigen Drehung um die Drehachse (X) im Wesentlichen konstant gehalten wird;
◦ dass die Werkzeugkraft (F), die durch das Werkzeug (23) auf die Messoberfläche ausgeübt wird, an einer Vielzahl von relativen Winkelpositionen zwischen dem Reifen und dem Werkzeug entlang der vollständigen Drehung; und
◦ wobei das Bestimmen, ob der Reifen einen Defekt aufweist, auf Grundlage der Höhe des Referenzumfangs (201) und auf Grundlage der Werkzeugkraft (F), die von dem Werkzeug ausgeübt wird, beinhaltet, dass der Reifen als einen Defekt aufweisend klassifiziert wird, wenn zumindest ein Wert der gemessenen Werkzeugkraft (F), die auf zumindest eine Messoberfläche ausgeübt wird, bei der vollständigen Drehung außerhalb eines vorbestimmten Bereichs von Kraftwerten liegt.

5. Verfahren nach Anspruch 1 oder 2, das beinhaltet:

◦ dass die Werkzeugkraft (F), die entlang der zumindest einen vollständigen Drehung um die Drehachse (X) ausgeübt wird, im Wesentlichen konstant gehalten wird, oder dass die Werkzeughöhe entlang der zumindest einen vollständigen Drehung um die Drehachse (X) im Wesentlichen konstant gehalten wird.

6. Verfahren nach einem oder mehreren der vorhergehenden Ansprüche, wobei das Verfahren beinhaltet:

◦ Festlegen eines gewünschten Werkzeughöhenwerts, auf welchen die verformte Oberfläche gebracht werden soll;
◦ Festlegen eines maximalen Werkzeugkraft-Werts (Fmax);
◦ Drücken gegen die Messoberfläche mittels des Werkzeugs, so dass die Messoberfläche (M) die gewünschte Werkzeughöhe erreicht;
◦ Messen der Werkzeugkraft während des Drückvorgangs;
◦ Beibehalten des Drückvorgangs, wenn die Werkzeugkraft die maximale Werkzeugkraft erreicht und/oder überschreitet; und
◦ Aufrechterhalten der maximalen Werkzeugkraft entlang der zumindest einen vollständigen Drehung um die Drehachse (X).

7. Verfahren nach einem oder mehreren der vorhergehenden Ansprüche, wobei das Verfahren beinhaltet:

◦ Bereitstellen einer Datenbank, welche eine Vielzahl von Reifenmodellen beinhaltet, wobei jedem Reifenmodell der Vielzahl eine Ruhelagenhöhe des freien seitlichen Abschnitts (10b) zugeordnet ist;
◦ Bestimmen des Reifenmodells, das an der Trägerebene (2) angeordnet ist;
◦ Abrufen eines Werts für die Ruhelagenhöhe, die dem bestimmten Reifenmodell zugeordnet ist, aus der Datenbank;
◦ Drücken der Messoberfläche (M), mittels des Werkzeugs, aus der Ruhelagenhöhe, wie sie aus der Datenbank abgerufen wurde, bis zu der Werkzeughöhe, oder Drücken der Messoberfläche mittels des Werkzeugs aus der Ruhelagenhöhe, wie sie aus der Datenbank abgerufen wurde, mit der Werkzeugkraft.

8. Verfahren nach einem oder mehreren der vorhergehenden Ansprüche, wobei das Verfahren beinhaltet:

◦ Erhalten einer Ruhelagenhöhe des Referenzumfangs (201) ;
◦ Bestimmen einer Differenz zwischen der Ruhelagenhöhe und der Werkzeughöhe während der vollständigen Drehung; und
◦ Bestimmen, ob der Reifen (3) einen Defekt an dem seitlichen Trägerabschnitt oder an dem freien seitlichen Abschnitt aufweist, auf Grundlage der Differenz,
wobei das Bestimmen, ob der Reifen (3) einen Defekt an dem seitlichen Trägerabschnitt (10a) oder an dem freien seitlichen Abschnitt (10b) aufweist, auf Grundlage der Differenz das Bestimmen beinhaltet, ob die Differenz größer als eine erste Schwelle ist oder die Differenz kleiner ist als eine zweite Schwelle.

9. Verfahren nach Anspruch 8, das beinhaltet:

   ◦ Erfassen eines ersten Bildes eines Abschnitts des Referenzumfangs in Ruhe;
   ◦ Erfassen eines zweiten Bilds eines Abschnitts des Referenzumfangs während der Drehung in ein und derselben Winkelpositionen, in welcher das erste Bild erfasst wurde;
   ◦ Bestimmen der Differenz durch Vergleichen des ersten und des zweiten Bilds.

10. Vorrichtung (1) zur Überprüfung von Reifen (3), wobei die Vorrichtung umfasst:

   ◦ eine Trägerebene (2), auf welcher der Reifen (3) aufgelegt werden kann, wobei der Reifen dann einen seitlichen Trägerabschnitt (10a), einen freien seitlichen Abschnitt (10b), der an einer gewissen Höhe in Bezug auf die Trägerebene (2) angeordnet ist, und einen Zenithabschnitt (10c) definiert, der zwischen dem freien seitlichen Abschnitt (10b) und dem seitlichen Trägerabschnitt (10a) angeordnet ist;
   ◦ ein Werkzeug (23), das dazu ausgestaltet ist, eine Werkzeugkraft (F), die zu der Trägerebene (2) hin weist, gegen eine Messoberfläche (M) des freien seitlichen Abschnitts (10b) des Reifens (3) auszuüben, um diese auf eine Werkzeughöhe zu bringen;
   ◦ ein Positionierstellglied (23a), das wirkmäßig dem Werkzeug (23) zugeordnet und dazu ausgestaltet ist, das Werkzeug zu dem Reifen (3) hin zu bewegen;
   ◦ eine Drehvorrichtung, um die Winkelposition der Messoberfläche in Bezug auf das Werkzeug (23) relativ zu modifizieren; **dadurch gekennzeichnet, dass** die Vorrichtung ferner umfasst:

      ◦ einen ersten Höhensensor (200), der dazu geeignet ist, eine Höhe eines Referenzumfangs (201) zu messen, der in dem Zenithabschnitt (10c) des Reifens identifiziert wird;
      ◦ eine Steuereinheit (108), die dazu programmiert ist
      ◦ einen Befehl an das Positionierstellglied (23a) zu senden, um das Werkzeug (23) an den Reifen heranzuführen, der an der Trägerebene angeordnet ist, so dass es an der Messoberfläche ruht, und um mittels des Werkzeugs (23) gegen die Messoberfläche (M) zu drücken, um die Werkzeugkraft auf die Messoberfläche zu der Trägerebene (2) hin auszuüben;
      ◦ während des Drückvorgangs einen Befehl an die Drehvorrichtung zu senden, um den Reifen (3) in Bezug auf das Werkzeug (23) in relative Drehung zu versetzen;
      ◦ ein Signal zu verarbeiten, das von dem ersten Höhensensor (200) kommt, um eine Höhe des Referenzumfangs während der Drehung zu messen;
      ◦ anzugeben, dass der Reifen (3) einen Defekt aufweist, auf Grundlage der gemessenen Höhe des Referenzumfangs (201).

11. Vorrichtung (1) nach Anspruch 10, die Folgendes beinhaltet:

   ◦ einen zweiten Höhensensor (202), der dazu geeignet ist, eine Höhe der Messoberfläche (M) an einer Vielzahl von relativen Winkelpositionen zwischen dem Reifen (3) und dem Werkzeug entlang der vollständigen Drehung zu messen; und/oder
   ◦ einen Kraftsensor (203), der dazu geeignet ist, eine Werkzeugkraft, die von dem Werkzeug (23) auf die Messoberfläche (M) ausgeübt wird, während der vollständigen Drehung zu messen,
   ◦ wobei das Positionierstellglied (23a) den zweiten Höhensensor (202) und den ersten Kraftsensor (203) beinhaltet.

12. Vorrichtung (1) nach Anspruch 11, wobei die Steuereinheit (108) dazu programmiert ist,

   ◦ ein Signal zu verarbeiten, das von dem zweiten Höhensensor (202) kommt, um die Werkzeughöhe während der Drehung zu bestimmen; und/oder
   ◦ ein Signal zu verarbeiten, das von dem Kraftsensor (203) kommt, um die Werkzeugkraft während der Drehung zu bestimmen; und
   ◦ anzugeben, dass der Reifen (3) einen Defekt beinhaltet, auf Grundlage der Höhe des Referenzumfangs (201) und auf Grundlage der Werkzeughöhe der Messoberfläche (M) und/oder der Werkzeugkraft, die von dem Werkzeug ausgeübt wird.

**13.** Vorrichtung (1) nach einem oder mehreren der Ansprüche 10 bis 12, wobei die Steuereinheit (108) dazu geeignet ist, das erste Positionierstellglied (23a) so anzutreiben, dass das Werkzeug (23) eine im Wesentlichen konstante Werkzeugkraft gegen die Messoberfläche (M) während der Drehung ausübt oder die Messoberfläche (M) an einer im Wesentlichen konstanten Werkzeughöhe in Bezug auf die Trägerebene (2) während der Drehung positioniert ist.

**14.** Vorrichtung (1) nach einem oder mehreren der Ansprüche 10 bis 13, wobei der erste Höhensensor (200) eine Videokamera beinhaltet, wobei die Videokamera dazu geeignet ist, Bilder des Referenzumfangs (201) zu erfassen und die Bilder an die Steuereinheit (108) zu senden.

**15.** Vorrichtung (1) nach einem oder mehreren der Ansprüche 10 bis 14, wobei das Werkzeug (23) eine Andruckrolle (25) beinhaltet und die Andruckrolle (25) montiert ist, um sich frei um ihre eigene Achse (24) drehen zu können.

**Revendications**

**1.** Procédé de contrôle de pneus, comprenant le fait :
◦ d'agencer un pneu (3) ayant un axe de rotation (X) sur un plan de support (2) définissant une partie latérale de support (10a), une partie latérale libre (10b) agencée à une certaine hauteur par rapport audit plan de support (2), et une partie de sommet (10c) agencée entre la partie latérale libre (10b) et la partie latérale de support (10a) ;
**caractérisé en ce que** le procédé comprend en outre le fait :

◦ de sélectionner une circonférence de référence (201) dudit pneu agencée au niveau de ladite partie de sommet (10c) ;
◦ d'amener un outil (23) vers ledit pneu (3) agencé sur le plan de support (2) de manière à reposer sur une surface de mesure (M), ladite surface de mesure (M) étant une partie d'une surface externe (32) de ladite partie latérale libre (10a) ;
◦ de pousser ladite surface de mesure au moyen dudit outil (23) de manière à appliquer une force d'outil (F) sur ladite surface de mesure (M) vers le plan de support (2) créant une surface de mesure déformée positionnée au niveau d'une hauteur d'outil ;
◦ pendant ladite action de poussée, de mettre ledit pneu (3) en rotation relative par rapport audit outil pour au moins une rotation complète autour dudit axe de rotation (X) ;
◦ de mesurer une hauteur de ladite circonférence de référence (201) pendant ladite rotation complète ; et
◦ de déterminer si ledit pneu (3) présente un défaut sur la base de ladite hauteur mesurée de ladite circonférence de référence (201).

**2.** Procédé selon la revendication 1, comportant le fait :
◦ de mesurer ladite hauteur d'outil de ladite surface de mesure (M) lors de ladite rotation complète et/ou de mesurer la force d'outil (F) exercée par ledit outil (23) sur ladite surface de mesure (M) lors de ladite rotation complète ;
et dans lequel le procédé comprend en outre le fait de déterminer si ledit pneu (3) présente un défaut sur la base de ladite hauteur d'outil mesurée et/ou de ladite force d'outil mesurée (F).

**3.** Procédé selon la revendication 2, comportant le fait :

◦ de maintenir la force d'outil (F) exercée lors de ladite au moins une rotation complète autour dudit axe de rotation (X) sensiblement constante ;
◦ de mesurer ladite hauteur d'outil de ladite surface de mesure (M) à une pluralité de positions angulaires relatives entre ledit pneu (3) et ledit outil (23) lors de ladite rotation complète ; et
◦ dans lequel le fait de déterminer si ledit pneu (3) présente un défaut sur la base de ladite hauteur de ladite circonférence de référence et sur la base de ladite hauteur d'outil de ladite surface de mesure (M) comporte la classification dudit pneu comme comportant un défaut si au moins une hauteur d'outil mesurée dans ladite rotation complète est en dehors d'une plage prédéterminée de valeurs de hauteur.

**4.** Procédé selon la revendication 2, comportant le fait :

◦ de maintenir la hauteur d'outil sensiblement constante lors de ladite au moins une rotation complète autour dudit axe de rotation (X) ;
◦ de mesurer la force d'outil (F) exercée par ledit outil (23) sur ladite surface de mesure à une pluralité de positions angulaires relatives entre ledit pneu et ledit outil lors de ladite rotation complète ; et

◦ dans lequel le fait de déterminer si ledit pneu présente un défaut sur la base de ladite hauteur de ladite circonférence de référence (201) et sur la base de ladite force d'outil (F) exercée par ledit outil comporte la classification dudit pneu comme comportant un défaut si au moins une valeur de ladite force d'outil mesurée (F) exercée sur au moins une surface de mesure dans ladite rotation complète est en dehors d'une plage prédéterminée de valeurs de force.

5. Procédé selon la revendication 1 ou 2, comportant le fait :

◦ de maintenir la force d'outil (F) exercée lors de ladite au moins une rotation complète autour dudit axe de rotation (X) sensiblement constante ou de maintenir la hauteur d'outil sensiblement constante lors de ladite au moins une rotation complète autour dudit axe de rotation (X) .

6. Procédé selon une ou plusieurs des revendications précédentes, comportant le fait :

◦ de fixer une valeur de hauteur d'outil souhaitée à laquelle ladite surface déformée doit être amenée ;
◦ de fixer une valeur de force d'outil maximale (Fmax) ;
◦ de pousser ladite surface de mesure au moyen dudit outil de sorte que ladite surface de mesure (M) atteigne ladite hauteur d'outil souhaitée ;
◦ de mesurer ladite force d'outil pendant ladite action de poussée ;
◦ de bloquer ladite action de poussée si ladite force d'outil atteint et/ou dépasse ladite force d'outil maximale ; et
◦ de maintien ladite force d'outil maximale lors de ladite au moins une rotation complète autour dudit axe de rotation (X).

7. Procédé selon une ou plusieurs des revendications précédentes, comportant le fait :

◦ de fournir une base de données comportant une pluralité de modèles de pneus, chaque modèle de pneu de la pluralité étant associé à une hauteur de repos de ladite partie latérale libre (10b) ;
◦ de déterminer le modèle de pneu agencé sur le plan de support (2) ;
◦ de récupérer une valeur de ladite hauteur de repos de ladite base de données et associée au modèle de pneu déterminé ;
◦ de pousser ladite surface de mesure (M) au moyen dudit outil jusqu'à ladite hauteur d'outil à partir de ladite hauteur de repos telle que récupérée de ladite base de données ou de pousser ladite surface de mesure au moyen dudit outil à partir de ladite hauteur de repos telle que récupérée de ladite base de données avec ladite force d'outil .

8. Procédé selon une ou plusieurs des revendications précédentes, comportant le fait :

◦ d'obtenir une hauteur de repos de ladite circonférence de référence (201) ;
◦ de déterminer une différence entre ladite hauteur de repos et ladite hauteur d'outil pendant ladite rotation complète ; et
◦ de déterminer si ledit pneu (3) présente un défaut sur ladite partie latérale de support ou sur ladite partie latérale libre sur la base de ladite différence,
dans lequel le fait de déterminer si ledit pneu (3) présente un défaut sur ladite partie latérale de support (10a) ou sur ladite partie latérale libre (10b) sur la base de ladite différence comporte le fait de déterminer si ladite différence est supérieure à un premier seuil ou si ladite différence est inférieure à un deuxième seuil.

9. Procédé selon la revendication 8, comportant le fait :

◦ de détecter une première image d'une partie de ladite circonférence de référence au repos ;
◦ de détecter une deuxième image d'une partie de ladite circonférence de référence pendant ladite rotation dans une même position angulaire dans laquelle ladite première image a été détectée ;
◦ de déterminer ladite différence en comparant lesdites première et deuxième images.

10. Appareil (1) de contrôle de pneus (3), l'appareil comprenant :

◦ un plan de support (2) sur lequel ledit pneu (3) est adapté pour être au repos, ledit pneu définissant ainsi intérieurement une partie latérale de support (10a), une partie latérale libre (10b) agencée à une certaine hauteur par rapport audit plan de support (2), et une partie de sommet (10c) agencée entre la partie latérale libre (10b) et la partie latérale de support (10a) ;
◦ un outil (23) configuré pour appliquer une force d'outil (F) tournée vers le plan de support (2) sur une surface de mesure (M) de ladite partie latérale libre (10b) du pneu (3) de manière à l'amener à une hauteur d'outil ;
◦ un actionneur de positionnement (23a) associé de manière fonctionnelle à l'outil (23) et configuré pour déplacer ledit outil vers ledit pneu (3) ;
◦ un dispositif de rotation pour modifier relativement la position angulaire de la surface de mesure par rapport à l'outil (23) ;
**caractérisé en ce que** l'appareil comprend en outre :

◦ un premier capteur de hauteur (200), adapté pour mesurer une hauteur d'une circonférence de référence (201) identifiée dans ladite partie de sommet (10c) dudit pneu ;
◦ une unité de commande (108) programmée pour

• envoyer une instruction audit actionneur de positionnement (23a) de manière à amener ledit outil (23) vers ledit pneu agencé sur le plan de support de manière à reposer sur ladite surface de mesure, et pousser ladite surface de mesure (M) au moyen dudit outil (23) de manière à appliquer ladite force d'outil sur ladite surface de mesure vers le plan de support (2) ;
• pendant ladite action de poussée, envoyer une instruction audit dispositif de rotation pour mettre ledit pneu (3) en rotation relative par rapport audit outil (23) ;
• traiter un signal provenant dudit premier capteur de hauteur (200) de manière à mesurer une hauteur de ladite circonférence de référence pendant ladite rotation ;
• indiquer que ledit pneu (3) comporte un défaut sur la base de ladite hauteur mesurée de ladite circonférence de référence (201).

**11.** Appareil (1) selon la revendication 10, comportant :

◦ un deuxième capteur de hauteur (202) adapté pour mesurer une hauteur de ladite surface de mesure (M) à une pluralité de positions angulaires relatives entre ledit pneu (3) et ledit outil lors de ladite rotation complète ; et/ou
◦ un capteur de force (203) adapté pour mesurer une force d'outil appliquée par ledit outil (23) sur ladite surface de mesure (M) pendant ladite rotation complète,
◦ dans lequel ledit actionneur de positionnement (23a) comporte ledit deuxième capteur de hauteur (202) et ledit premier capteur de force (203).

**12.** Appareil (1) selon la revendication 11, dans lequel ladite unité de commande (108) est programmée pour

◦ traiter un signal provenant dudit deuxième capteur de hauteur (202) de manière à déterminer ladite hauteur d'outil pendant ladite rotation ; et/ou
◦ traiter un signal provenant dudit capteur de force (203) de manière à déterminer ladite force d'outil pendant ladite rotation ; et
◦ indiquer que ledit pneu (3) comporte un défaut sur la base de ladite hauteur de ladite circonférence de référence (201) et sur la base de ladite hauteur d'outil de ladite surface de mesure (M) et/ou de ladite force d'outil exercée par ledit outil.

**13.** Appareil (1) selon une ou plusieurs des revendications 10 à 12, dans lequel ladite unité de commande (108) est adaptée pour entraîner ledit premier actionneur de positionnement (23a) de sorte que ledit outil (23) applique une force d'outil sensiblement constante contre ladite surface de mesure (M) pendant ladite rotation ou positionne ladite surface de mesure (M) à une hauteur d'outil sensiblement constante par rapport audit plan de support (2) pendant ladite rotation.

**14.** Appareil (1) selon une ou plusieurs des revendications 10 à 13, dans lequel ledit premier capteur de hauteur (200) comporte une caméra vidéo, ladite caméra vidéo étant adaptée pour détecter des images de ladite circonférence de référence (201) et pour envoyer lesdites images à ladite unité de commande (108).

**15.** Appareil (1) selon une ou plusieurs des revendications 10 à 14, dans lequel ledit outil (23) comporte un rouleau de poussée (25) et le rouleau de poussée (25) est monté de manière à pouvoir tourner librement autour de son propre axe (24).

**FIG.1**

FIG.2

FIG.5

EP 3 698 118 B1

FIG.3

FIG.6

EP 3 698 118 B1

FIG.4a

FIG.4b

reference circumference height depression (mm)

0.00 -0.20 -0.40 -0.60 -0.80 -1.00 -1.20 -1.40 -1.60 -1.80 -2.00

Angular position

360°

0°

d

e

b

-204.00 -204.00 -197.00 -198.00 -199.00 -200.00 -201.00 -202.00 -203.00 -204.00

Height (mm)

——— Height reached

·········· Height reached- reference circumference height

— — — Reference circumference height depression

FIG.4c

**EP 3 698 118 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060272408 A
- WO 2015079370 A
- WO 2017141094 A1

**28**